# FASCICULE DE BREVET EUROPEEN

(11) **EP 1 882 121 B1**
(45) Date de publication et mention de la délivrance du brevet: **20.01.2010**
(21) Numéro de dépôt: 06743807.7
(22) Date de dépôt: 13.04.2006
(51) Int. Cl.: F16J 15/04, F16B 33/00

(54) **ETANCHEITE PAR DEFORMATION DE MATIERE**
ABDICHTUNG DURCH MATERIALDEFORMATION
SEALING BY MATERIAL DEFORMATION

(30) Priorité: 19.05.2005 FR 0505025
(43) Date de publication de la demande: 30.01.2008
(73) Titulaire: VALEO EQUIPEMENTS ELECTRIQUES MOTEUR, 94017 Créteil Cedex (FR)
(72) Inventeur: BERTOLINO, Rémi, F-69680 Chassieu (FR); TOURNIER, Christian, F-38300 Badinieres (FR)
(74) Mandataire: Gamonal, Didier
(86) Numéro de dépôt international: PCT/FR2006/050349
(87) Numéro de publication internationale: WO 2006/123076

(56) Documents cités:
- WO-A-2004/088126
- DE-A1- 4 342 461
- FR-A- 1 484 141
- FR-A- 2 241 015
- FR-A- 2 509 823
- US-A- 5 878 488

## Description

La présente invention concerne l'étanchéité entre le débouché d'un alésage et une vis et plus précisément un procédé et un assemblage pour assurer l'étanchéité entre la vis et le débouché de l'alésage sur lequel vient buter la tête de la vis.

L'invention trouve des applications, notamment, dans le domaine de l'industrie automobile et plus précisément pour l'assemblage d'un contacteur sur un support de démarreur.

### Etat de la technique

Le procédé de l'invention, concerne la réalisation de l'étanchéité entre le débouché d'un alésage appartenant à un support et une vis comprenant une tête reliée à un corps doté d'une partie filetée destinée à coopérer avec un trou d'une pièce à assembler avec le support, le support ayant une résistance mécanique plus faible que la vis.

Le document FR 2 509 823 divulgue un procédé pour la réalisation de l'étanchéité entre le débouché d'un alésage d'un capot moulé en une matière thermo-plastique et une borne.

Des moyens sous la tête de la borne sont prévus pour agir sur le débouché de l'alésage de manière que le serrage de la borne par rapport au capot entraîne la déformation du débouché en provoquant le fluage de la matière plastique afin qu'elle constitue un bourrelet qui vient se resserrer contre la périphérie lisse du corps de la borne.

Les moyens portés par la borne pour déformer le débouché de l'alésage sont réalisés sous la forme d'un chanfrein, constituant la liaison entre la tête et le corps de la borne, ce chanfrein venant prendre appui contre le bord à angle vif de l'alésage du boîtier.

En variante, c'est le débouché de l'alésage qui comporte un cordon périphérique extérieur qui est refoulé par le dessous plat de la tête de la borne en vue de constituer le bourrelet.

Ce document concerne particulièrement l'étanchéité des bornes du contacteur d'un démarreur électrique pour moteur à combustion interne.

Le procédé divulgué dans le document FR 2 509 823, s'applique à une borne présentant sur la périphérie de son corps une surface lisse afin de permettre au bourrelet de se resserrer contre cette périphérie. Il est donc nécessaire de mettre au point un procédé de fabrication spécifique pour la réalisation de cette surface lisse, ce qui peut être coûteux.

En outre, le procédé décrit ne concerne qu'un capot moulé en matière thermoplastique.

Enfin, l'étanchéité a lieu uniquement entre le bourrelet et la périphérie de la partie lisse de la borne.

Dans le document US 5 878 488, conforme au préambule de la revendication 1, il faut usiner le passage de la vis et le corps de la vis pour respecter des côtes en sorte que la solution ne réalise pas une étanchéité de manière simple et économique.

### Exposé de l'invention

Aussi, un problème technique à résoudre par l'objet de la présente invention est de proposer un procédé et un assemblage pour la réalisation d'une étanchéité entre le débouché d'un alésage appartenant à un support et une vis qui permettent :
- d'éviter l'utilisation d'une pièce supplémentaire assurant l'étanchéité,
- de réaliser l'étanchéité entre deux surfaces appartenant à des pièces pouvant être métalliques,
- de réaliser l'étanchéité entre des surfaces ne nécessitant pas forcément un état de surface lisse,
- de réaliser l'étanchéité entre le débouché de l'alésage et la vis, cette vis pouvant résister à des contraintes mécaniques, vibratoires, thermiques importantes,
- de réaliser l'étanchéité et ce de manière simple et économique.

Une solution au problème technique posé est selon un premier objet de la présente invention résolu par la partie caractérisante de la revendication 1.

Ainsi, il n'est pas nécessaire d'utiliser une pièce supplémentaire pour réaliser l'étanchéité, tel qu'un joint de type torique. On évite également la réalisation d'un lamage pour ménager ce joint dans le support. En outre, le procédé ne nécessite pas l'utilisation d'une vis spécialement traitée au niveau de son état de surface. Enfin, le débouché de l'alésage recevant la tête de la vis, peut être issue directement de moulage, dans le cas où le support est moulé, sans avoir à passer par une étape d'usinage supplémentaire pour améliorer son état de surface.

Selon une caractéristique supplémentaire le support est en aluminium et la vis est en acier.

Selon un deuxième objet de l'invention, un assemblage étanche obtenu par le premier objet de l'invention est caractérisé par la partie caractérisante de la revendication 8.

Ces surfaces participent ainsi activement à l'adaptation étanche du débouché sur une partie de la surface sous tête de la vis.

Selon une caractéristique supplémentaire, l'assemblage est réalisé entre un support avant de démarreur et au moins une vis pour fixer un contacteur à ce support.

Selon une autre caractéristique, l'assemblage est réalisé entre un palier arrière de démarreur et au moins une vis pour fixer un contacteur à ce palier.

### Brève description des figures

La Fig. 1 est une vue latérale du démarreur avec un arrachement partiel pour présenter le pignon et la couronne dentée de démarrage du moteur thermique,
La Fig. 2 est une vue en coupe présentant la vis dans l'alésage du support,
La Fig. 3 est une vue en coupe présentant l'empreinte laissée par la tête de la vis sur le débouché de l'alésage,
La Fig. 4 est une vue en coupe du contacteur recevant une vis pour sa fixation sur le support.

### Description détaillée de modes de réalisation de l'invention.

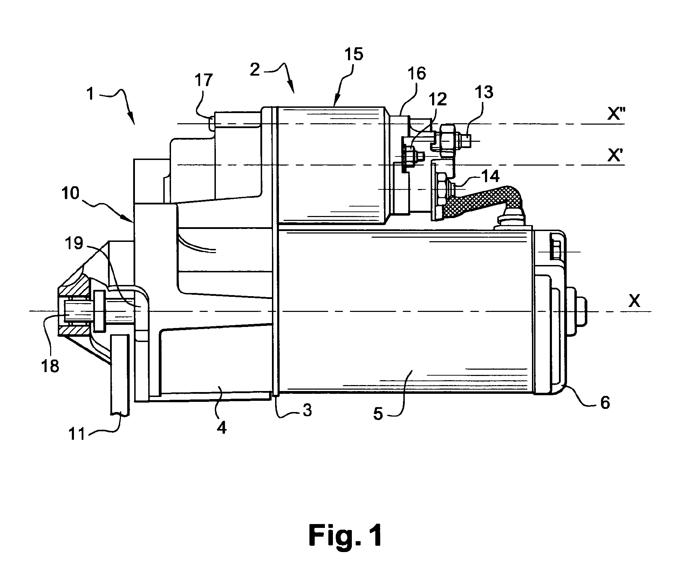

On a représenté à la Fig. 1 un démarreur 1 de moteur thermique.

Dans la suite de la description, on utilisera une orientation axiale X-X d'avant en arrière qui correspond à une orientation de gauche à droite en considérant la Fig. 1.

Dans cette Fig. 1, on a représenté le contacteur 2 électromagnétique monté, selon l'invention, sur un carter 10 de démarreur comportant un support avant 4, configuré pour être fixé sur une partie fixe telle que le carter d'un moteur thermique d'un véhicule automobile, une culasse 5 à l'intérieur de laquelle sont logés les composants du moteur électrique du démarreur notamment le stator, le rotor, et l'arbre du rotor. Le carter 10 comporte également un palier arrière 6 configuré pour servir de palier à l'extrémité arrière de l'arbre du rotor du moteur électrique.

On voit également, dans cette figure, le pignon 19 du lanceur du démarreur, une partie de la couronne dentée 11 de démarrage du moteur thermique à démarrer, ainsi que l'arbre de sortie 18 du démarreur.

Le démarreur 1 possède un contacteur 2 électromagnétique pour la commande dudit démarreur 1. Ce contacteur comporte une cuve 15 destinée à être fixée sur le support 4 à l'aide d'au moins un organe de fixation 17, dont un seul est représenté. Cet organe comporte avantageusement une tête reliée à un corps fileté, appelé également tige filetée.

Le contacteur 2 est ici situé sur la partie supérieure du démarreur 1 et son axe X' est sensiblement parallèle à l'axe X de l'arbre de sortie 18. En variante, le contacteur peut être déporté en étant fixé sur le palier arrière 6 du moteur électrique. Dans ce cas, le palier arrière constitue le support du contacteur et l'axe de ce contacteur est alors sensiblement perpendiculaire à l'axe du rotor du moteur électrique confondu ici avec l'axe de l'arbre de sortie 18.

Le démarreur 1 possède, de manière précitée, une cuve 15 sur laquelle est fixé, à l'arrière, un capot 16 recevant des bornes électriques à savoir une première borne 13 destinée à être reliée à la batterie du véhicule, une seconde borne 14 destinée à être reliée au moteur électrique, une troisième borne 12 pour l'alimentation de la bobine électromagnétique du contacteur montée à l'intérieur de la cuve 15. Le capot peut être fixé sur la cuve par sertissage, vissage ou autre. Le capot est de préférence en matière électriquement isolante.

Les bornes 12 à 14 sont d'orientation axiale par rapport à l'axe X'. En variante, l'une au moins des bornes électriques est d'orientation radiale.

Dans une autre variante, l'une au moins des bornes électriques est fixée directement sur la cuve.

Le capot a ici une forme sensiblement cylindrique.

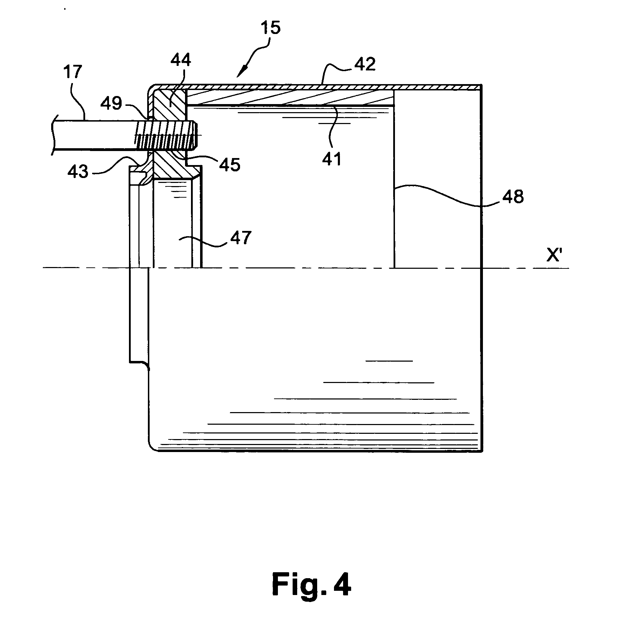

La Fig. 4 est une vue en coupe du contacteur. On a représenté un exemple d'une cuve 15 comportant au moins un trous 45 de fixation.

La cuve est ici en trois parties. Elle comprend un fond 44 d'orientation transversale à l'axe X' et présentant le trou 45 de fixation fileté ainsi qu'un orifice 47, pour le passage d'un noyau mobile, centré sur l'axe X'.

La cuve comprend également une enveloppe 42 fixée sur le fond 44 et présentant une partie d'orientation axiale s'étendant en direction opposé audit fond 44. L'enveloppe 42 comprend également une partie recouvrant la partie externe avant du fond 44 et se terminant par un orifice de centrage de la cuve. L'orifice de centrage est composé de bossages 43. Cet orifice est, de plus, coaxial à l'orifice 47 de passage du noyau mobile. La partie de l'enveloppe recouvrant la partie externe du fond 44 présente également au moins un orifice 49 coaxial au trou 45. L'orifice 49 a, ici, un diamètre supérieur au trou 45. L'enveloppe 42 a subi, par avance, un traitement de surface pour résister à la corrosion ainsi que pour lui conférer un aspect esthétique.

Enfin, la cuve comprend également une virole 41, de forme tubulaire, d'orientation axiale, logée à l'intérieur de l'enveloppe 42. L'enveloppe 42 est en saillie axiale par rapport à la virole 41. Cette virole 41 présente un épaulement 48, pour l'appui axial du noyau fixe (non représenté). Elle assure également une liaison électromagnétique entre le fond 44 et ledit noyau fixe.

Les épaisseurs du fond 44 et de la virole 41 sont déterminées en fonction des besoins du passage du flux magnétique. En pratique, pour éviter une consommation trop grande de courant et un volume de cuivre trop important au niveau du bobinage de la bobine électromagnétique, il est nécessaire de ne pas trop saturer le circuit magnétique, donc d'avoir une section de passage du flux magnétique suffisamment grande.

En variante, la cuve peut être réalisée en une seule partie, par matriçage, moulage, forgeage, frittage ou autre similaire.

Au cours de sa durée de vie, le démarreur est soumis à des projections d'eau ou de poussière. Tout défaut d'étanchéité au niveau du contacteur, peut alors entraîner un mauvais fonctionnement de l'ensemble par exemple par oxydation de certains éléments dans le contacteur.

Les défauts d'étanchéités peuvent avoir lieu en plusieurs endroits. L'eau et la poussière s'infiltrent notamment au niveau des bornes 12 et 13 du contacteur. On peut ainsi prévoir un procédé pour la réalisation de l'étanchéité entre les bornes et le capot 16, par exemple tel que celui divulgué dans le document de l'état de la technique.

Les infiltrations ont lieu également à l'interface entre le capot 16 et la cuve 15. On peut ainsi assurer l'étanchéité en améliorant le sertissage des deux pièces.

Pour éviter les infiltrations entre la cuve 15 et le support de démarreur 4, on peut assurer l'étanchéité par la présence d'une plaque de base 3, en variante l'étanchéité peut se faire par un joint de type élastomère ou papier.

La demanderesse s'est aperçue que des infiltrations ont lieu également entre la surface sous tête de l'organe de fixation 17, d'axe X" sensiblement parallèle à l'axe X et le débouché de l'alésage appartenant au support 4 et recevant l'organe de fixation 17. Ce phénomène est d'autant plus important, que la tête peut subir à ce niveau des contraintes mécaniques, vibratoires, et thermiques importantes. L'organe de fixation 17 peut être, par exemple, une vis comprenant une tête reliée à un corps en partie fileté.

Or, la disposition de deux surfaces appuyées l'une sur l'autre ne conduit généralement qu'à une étanchéité relative. En effet, les surfaces comportent des défauts sources de fuites.

L'invention vise alors à limiter les effets de ces défauts.

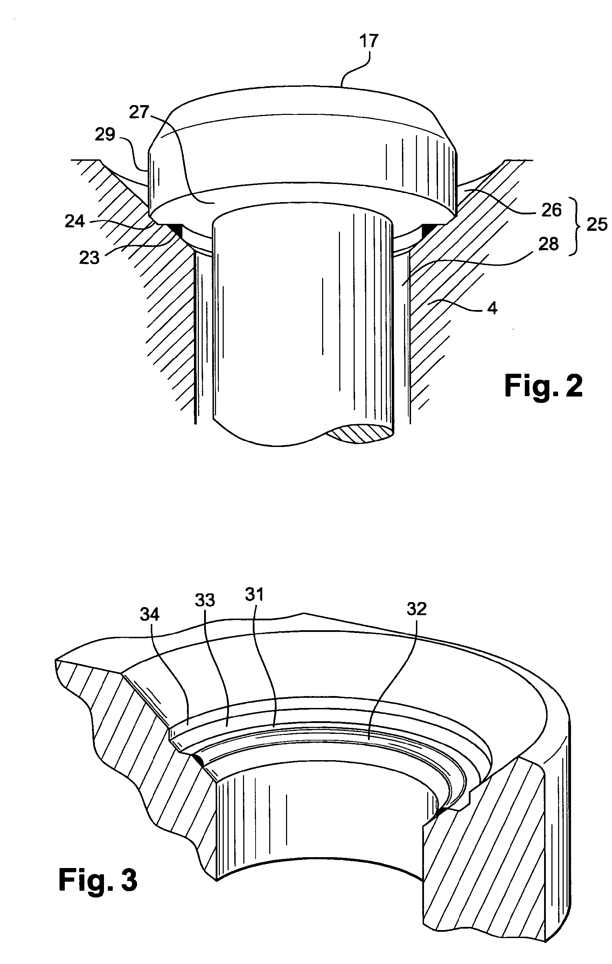

Pour cela, la Fig. 2 présente une vis 17, engagée dans un alésage 25 appartenant à un support 4. L'alésage est formé, par exemple, en la faveur d'une cheminée. Il comprend une partie de passage 28 de la vis, et un débouché 26 correspondant à la surface intermédiaire entre la partie de passage 28 et la surface externe du support 4. La partie de passage peut avoir une section carrée, rectangulaire, ovale ou polygonale. La Fig. 2 présente une section de la partie de passage ronde de diamètre supérieur au diamètre du corps de la vis.

Le support 4 peut être un support moulé. Le débouché appartenant au support est alors formé par exemple par moulage ou brochage.

La vis 17 est une vis standard constituée d'une tête assurant la pression sur le débouché 26 de l'alésage 25. Cette vis 17 possède une surface sous tête de révolution et le débouché a une forme évasée ainsi ils n'offrent qu'une faible zone de contact entre eux.

Dans un mode de réalisation préférentiel présenté à la Fig. 2, la surface sous tête est plane et le débouché a une forme tronconique. Ainsi la zone de contact entre la tête de vis et le débouché est sensiblement égale à un cercle. La pression exercée par la tête sur cette zone est donc très importante. Elle favorise ainsi la pénétration de la tête dans la matière du support et une meilleure adaptation étanche du débouché sur une partie de la surface sous tête au cours du vissage.

Le procédé pour la réalisation de l'étanchéité comporte les étapes suivantes. Dans une première étape, on va venir engager la vis dans l'alésage de sorte que la tête vienne en contact avec le débouché élargi.

Dans une deuxième étape, le vissage de la vis dans le trou 45 s'effectue de sorte que la pression exercée par la tête entraîne une adaptation étanche du débouché sur une partie de la surface sous tête de la vis.

En effet, la vis possède un corps doté d'une partie filetée venant se visser dans un trou 45 appartenant à la cuve. De cette manière on vient assembler la cuve avec le support. Le trou 45 est taraudé avant que la vis y pénètre. En variante, la vis est autotaraudeuse et vient assurer la création du filetage dans le trou 45. Dans une autre variante, le trou 45 formé dans la cuve peut être non fileté et on vient visser le corps de la vis dans un écrou rapporté, par exemple, sur le fond 44. L'écrou peut être fixé sur le fond 44 par exemple par soudage ou il peut être libre.

On réalise ainsi une étanchéité, sans pièce supplémentaire, entre des surfaces non lisses.

Durant l'assemblage de la vis, la tête vient s'enfoncer dans la matière du support. La vis effectue un mouvement de translation combiné à un mouvement de rotation par rapport au support. Le support ayant une résistance mécanique plus faible que la vis, la tête va pénétrer dans la matière et les défauts du débouché vont être atténués par le frottement d'une partie de la surface sous tête de la vis avec le débouché.

Ainsi, l'adaptation étanche du débouché sur une partie de la surface sous la tête de la vis est réalisée par atténuation des défauts de la matière du support et par déformation de cette matière dans les défauts de la surface sous tête de la vis.

La pression exercée par la tête entraîne, par frottement et refoulement d'une partie de la matière, la création de la surface 31 sur le débouché. Dans le même temps, cet enfoncement entraîne le matage d'une partie de la matière du support sous la tête et la formation ainsi d'un bourrelet 23 venant se presser contre la surface sous tête de la vis pour constituer la surface 32. La surface sous tête vient guider le bourrelet lors de sa formation.

De préférence, l'étanchéité n'est pas réalisée par contact entre le bourrelet de matière et le corps de la vis du fait de la profondeur du débouché.

Afin de réaliser l'adaptation étanche du débouché sur une partie de la surface sous tête, il faut que le support ait une résistance mécanique plus faible que la vis. Le choix des matériaux est donc important. Si la différence de résistance mécanique entre la vis et le support est trop faible, la tête de la vis ne viendra pas bien s'enfoncer, et elle risque, lors de son mouvement de rotation, de venir arracher la matière du support. De plus, si la tête ne vient pas bien s'enfoncer, le vissage de la partie filetée dans le trou 45 de la cuve ne sera pas suffisant pour assurer une bonne fixation du contacteur sur le support. A l'inverse, si cette différence est trop importante, la tête va venir s'enfoncer d'une manière trop importante dans la matière. Il y alors un risque pour que le corps de la vis vienne en contact avec la bobine électromagnétique et perturbe en conséquence son fonctionnement.

De manière préférentielle, le support est en aluminium. Ce matériau offre l'avantage d'être capable de résister aux diverses contraintes que peut subir un support de démarreur au cours de son utilisation. La vis est en acier, de préférence inoxydable, ce qui permet d'utiliser des organes de fixation 17 standard pour la fixation du contacteur sur le démarreur. En variante, la vis fait l'objet d'un traitement de surface destiné à la protéger contre la corrosion. Ce traitement peut également améliorer le coefficient de frottement de la vis. Le traitement peut être par exemple un zingage créant une fine couche de protection. Cette couche, par sa résistance mécanique, peut participer également à l'adaptation étanche des surfaces.

A la fin de l'assemblage de la vis, on obtient une empreinte de la tête de vis dans le support tel que représentée à la Fig. 3.

Cette empreinte comprend notamment au moins deux surfaces 31, 32 participant activement à l'adaptation étanche du débouché sur une partie de la surface sous tête de la vis.

La surface 31 s'étend circonférentiellement autour de l'axe de révolution de la vis. Cette surface évolue au fur et à mesure que la tête s'enfonce dans la matière du support 4.

La surface 32, appartenant au bourrelet 23, s'étend circonférentiellement autour de l'axe de révolution de la vis en prolongeant la surface 31.

La Fig. 3 présente une empreinte comprenant également une surface 33, issue de l'adaptation dans le support d'un chanfrein 24 assurant la liaison entre la surface latérale 29 de la tête de vis et la surface sous tête 27. En variante, il peut ne pas y avoir de chanfrein, la surface latérale 29 formant alors avec la surface sous tête 27 un angle sensiblement perpendiculaire. L'empreinte comprend en outre une surface 34, issue de l'adaptation de la surface latérale 29 dans le support. Les surfaces 33, 34 participent, mais dans une moindre mesure, à l'étanchéité entre le débouché et le support.

Ainsi, l'invention permet de réaliser un assemblage étanche entre deux pièces métalliques de surfaces non lisses, sans l'utilisation d'une pièce supplémentaire assurant cette étanchéité. Le procédé est donc simple et économique. L'invention s'applique, en outre, pour le montage d'un contacteur sur un carter de démarreur.

La présente description n'est pas limitée aux exemples de réalisation décrits ci-dessus, mais par la portée des revendications en annexe.

## Revendications

1. Procédé pour la réalisation d'un assemblage étanche entre le débouché (26) d'un alésage (25) appartenant à un support (4) et une vis (17) comprenant une tête et reliée à un corps doté d'une partie filetée destinée à coopérer avec un trou d'une pièce à assembler avec le support, le support ayant une résistance mécanique plus faible que la vis, ***caractérisé* en ce que**, partant d'un débouché élargi de forme tronconique et d'une tête de vis dotée d'une surface sous tête (27) plane de révolution, le procédé comporte les étapes suivantes :
- engager la vis dans l'alésage (25) de sorte que la tête vienne en contact avec le débouché (26) de forme tronconique,
- visser la vis dans le trou de la pièce à assembler de sorte que la pression exercée par la tête entraîne une adaptation étanche du débouché sur une partie de la surface sous tête (27) de la vis par atténuation des défauts du débouché due au frottement d'une partie de la surface sous tête (27) de la vis avec ledit débouché et par refoulement d'une partie de la matière appartenant au support (4).

2. Procédé selon la revendication 1, **caractérisé en ce que** la pression exercée par la tête entraîne, par frottement et refoulement de matière, la création sur le débouché (26) d'une première surface (31), s'étendant circonférentiellement autour de l'axe de révolution de la vis.

3. Procédé selon la revendication 1 ou 2, ***caractérisé* en ce que** le refoulement de matière crée un bourrelet (23).

4. Procédé selon les revendication 2 et 3, **caractérisé en ce que** le refoulement de matière crée un bourrelet (23) présentant une deuxième surface (32) pressée contre la surface sous tête (27) de la vis (17) et **en ce que** la deuxième surface (32) s'étend circonférentiellement autour de l'axe de révolution de la vis en prolongeant la première surface (31).

5. Procédé selon l'une quelconque des revendications précédentes,
**caractérisé en ce que** la vis (17) présente une surface latérale (29) formant avec la surface (27) sous tête de la vis un angle sensiblement perpendiculaire et **en ce que** la pression exercée par la tête de la vis entraîne la création d'une surface (34), dite troisième surface, issue de l'adaptation de la surface latérale (29) de la vis (31) dans le support (4).

6. Procédé selon la revendication 5, **caractérisé en ce que** la vis (17) présente un chanfrein (24) assurant la liaison entre la surface latérale (29) de la tête de la vis (17) et la surface sous tête (27) de la vis (17) et **en ce que** la pression exercée par la tête de la vis entraîne la création d'une surface (33), dite quatrième surface, issue de l'adaptation du chanfrein (24) dans le support (4).

7. Procédé selon l'une quelconque des revendications précédentes, ***caractérisé en ce que*** le support (4) est en aluminium et la vis (17) est en acier.

8. Assemblage étanche entre le débouché (26) d'un alésage (25) appartenant à un support (4) et une vis (17) comprenant une tête reliée à un corps doté d'une partie filetée destinée à coopérer avec un trou d'une pièce à assembler avec le support, le support ayant une résistance mécanique plus faible que la vis, ***caractérisé* en ce que** le débouché (26) est de forme tronconique, **en ce que** la tête de la vis est dotée d'une surface latérale (29) et d'une surface sous tête (27) plane de révolution formant avec la surface latérale (29) un angle sensiblement perpendiculaire et **en ce que** l'empreinte laissée par la tête de vis sur le débouché (26) comprend au moins ;
- une première surface (31) s'étendant, circonférentiellement autour de l'axe de révolution de la vis,
- une deuxième surface (32), appartenant à un bourrelet (23) s'étendant, circonférentiellement autour de l'axe de révolution de la vis et prolongeant la première surface (31)
- une troisième surface (34) issue de l'adaptation de la surface latérale (29) de la vis (17) dans le support (4).

9. Assemblage étanche selon la revendication précédente, **caractérisé en ce que** la tête de la vis est dotée d'un chanfrein (24) assurant la liaison entre la surface latérale (29) de la tête de la vis (17) et la surface sous tête (27) de la vis (17) et **en ce que** l'empreinte comporte une quatrième surface (33) issue de l'adaptation dans le support (4) du chanfrein (24).

10. Assemblage étanche selon la revendication 8 ou 9, ***caractérisé en ce que*** l'assemblage est réalisé entre un support avant de démarreur (4) et au moins une vis pour fixer un contacteur (2) à ce support.

11. Assemblage étanche selon la revendication *8,* ***caractérisé en ce que*** l'assemblage est réalisé entre un palier arrière (6) de démarreur et au moins une vis pour fixer un contacteur (2) à ce palier.

## Claims

1. Method for producing a sealed assembly between the opening (26) of a bore (25) belonging to a support (4) and a screw (17) comprising a head connected to a body provided with a threaded part intended to cooperate with a hole in a piece to be assembled with the support, the support having a lower mechanical strength than the screw, **characterised in that**, starting from an enlarged opening frustoconical in shape and a screw head provided with an under-head surface (27) planar of revolution, the method comprises the following steps:
- engaging the screw in the bore (25) so that the head comes into contact with the frustoconical-shaped opening (26),
- screwing the screw into the hole in the piece to be assembled so that the pressure exerted by the head causes a sealed fitting of the opening on part of the under-head surface (27) of the screw by attenuation of the defects in the opening due to the friction of part of the under-head surface (27) of the screw with the said opening and by pushing back part of the material belonging to the support (4).

2. Method according to claim 1, **characterised in that** the pressure exerted by the head causes, by rubbing and pushing back of material, the creation on the opening (26) of a first surface (31), extending circumferentially around the axis of revolution of the screw.

3. Method according to claim 1 or 2, **characterised in that** the pushing back of material creates a rim (23).

4. Method according to claims 2 and 3, **characterised in that** the pushing back of material creates a rim (23) having a second surface (32) pressed against the under-head surface (27) of the screw (17) and **in that** the second surface (32) extends circumferentially around the axis of revolution of the screw, extending the first surface (31).

5. Method according to any one of the preceding claims, **characterised in that** the screw (17) has a lateral surface (29) forming, with the under-head surface (27) of the screw, a substantially perpendicular angle and **in that** the pressure exerted by the head of the screw causes the creation of a surface (34), referred to as the third surface, issuing from the adaptation of the lateral surface (29) of the screw (31) in the support (4).

6. Method according to claim 5, **characterised in that** the screw (17) has a bevel (24) providing the connection between the lateral surface (29) of the head of the screw (17) and the under-head surface (27) of the screw (17) and **in that** the pressure exerted by the head of the screw causes the creation of a surface (33), referred to as the fourth surface, issuing from the adaptation of the bevel (24) in the support (4).

7. Method according to any one of the preceding claims, **characterised in that** the support (4) is made from aluminium and the screw (17) is made from steel.

8. Sealed assembly between the opening (26) of a bore (25) belonging to a support (4) and a screw (17) comprising a head connected to a body provided with a threaded part intended to cooperate with a hole in a piece to be assembled with the support, the support having a lower mechanical strength than the screw, **characterised in that** the opening (26) is frustoconical in shape, **in that** the head of the screw is provided with a lateral surface (29) and an under-head surface (27) planar of revolution forming with the lateral surface (29) a substantially perpendicular angle and **in that** the impression left by the screw head on the opening (26) comprises at least:
- a first surface (31), extending circumferentially around the axis of revolution of the screw,
- a second surface (32), belonging to a rim (23) extending circumferentially around the axis of revolution of the screw and extending the first surface (31),
- a third surface (34) issuing from the adaptation of the lateral surface (29) of the screw (17) in the support (4).

9. Sealed assembly according to the preceding claim, **characterised in that** the head of the screw is provided with a bevel (24) providing the connection between the lateral surface (29) of the head of the screw (17) and the under-head surface (27) of the screw (17) and **in that** the impression comprises a fourth surface (33) issuing from the adaptation in the support (4) of the bevel (24).

10. Sealed assembly according to claim 8 or 9, **characterised in that** the assembly is effected between a front support of the starter (4) and at least one screw for fixing a contactor (2) to this support.

11. Sealed assembly according to claim 8, **characterised in that** the assembly is effected between a rear starter bearing (6) and at least one screw for fixing a contactor (2) to this bearing.

## Patentansprüche

1. Verfahren zur Herstellung einer dichten Verbindung zwischen dem Austritt (26) einer Bohrung (25), die zu einem Träger (4) gehört, und einer Schraube (17), die einen Kopf umfasst, der mit einem Körper verbunden ist, der über einen Gewindeteil verfügt, welcher für das Zusammenwirken mit einem Loch eines Teils bestimmt ist, das mit dem Träger verbunden werde soll, wobei der Träger eine geringere mechanische Festigkeit als die Schraube aufweist, **dadurch gekennzeichnet, dass**, ausgehend von einem kegelstumpfförmigen erweiterten Bohrungsaustritt und einem Schraubenkopf mit einer rotationssymmetrischen Unterkopffläche (27), das Verfahren die folgenden Schritte umfasst;
- Einsetzen der Schraube so in die Bohrung (25), dass der Kopf mit dem kegelstumpfförmigen Bohrungsaustritt (26) in Kontakt kommt,
- Einschrauben der Schraube so in das Loch des zu verbindenden Teils, dass der durch den Kopf ausgeübte Druck durch Abschwächung der Fehler des Bohrungsaustritts infolge der Reibung zwischen einem Teil der Unterkopffläche (27) der Schraube und dem besagten Bohrungsaustritt und durch Stauchung eines Teils des zum Träger (4) gehörenden Materials eine dichte Anpassung des Bohrungsaustritts über einen Teil der Unterkopffläche (27) der Schraube herbeiführt.

2. Verfahren nach Anspruch 1, **dadurch gekennzeichnet, dass** der durch den Kopf ausgeübte Druck durch Reibung und Materialstauchung die Entstehung einer ersten Fläche (31) am Bohrungsaustritt (26) zur Folge hat, die sich in Umfangsrichtung um die Rotationsachse der Schraube erstreckt.

3. Verfahren nach Anspruch 1 oder 2, **dadurch gekennzeichnet, dass** durch die Materialstauchung ein Wulst (23) gebildet wird.

4. Verfahren nach den Ansprüchen 2 und 3, **dadurch gekennzeichnet, dass** durch die Materialstauchung ein Wulst (23) gebildet wird, der eine zweite Fläche (32) aufweist, die gegen die Unterkopffläche (27) der Schraube (17) gepresst wird, und **dass** sich die zweite Fläche (32) in Umfangsrichtung um die Rotationsachse der Schraube erstreckt, wobei sie die erste Fläche (31) verlängert.

5. Verfahren nach einem der vorangehenden Ansprüche, **dadurch gekennzeichnet, dass** die Schraube (17) eine Seitenfläche (29) aufweist, die mit der Unterkopffläche (27) der Schraube einen in etwa rechten Winkel bildet, und **dass** der durch den Kopf der Schraube ausgeübte Druck die Bildung einer als dritte Fläche bezeichneten Fläche (34) bewirkt, die aus der Anpassung der Seitenfläche (29) der Schraube (17) im Träger (4) hervorgeht.

6. Verfahren nach Anspruch 5, **dadurch gekennzeichnet, dass** die Schraube (17) eine Abschrägung (24) aufweist, welche die Verbindung zwischen der Seitenfläche (29) des Kopfes der Schraube (17) und der Unterkopffläche (27) der Schraube (17) herstellt, und **dass** der durch den Kopf der Schraube ausgeübte Druck die Bildung einer als vierte Fläche bezeichneten Fläche (33) bewirkt, die aus der Anpassung der Abschrägung (24) im Träger (4) hervorgeht.

7. Verfahren nach einem der vorangehenden Ansprüche, **dadurch gekennzeichnet, dass** der Träger (4) aus Aluminium und die Schraube (17) aus Stahl besteht.

8. Dichte Verbindung zwischen dem Austritt (26) einer Bohrung (25), die zu einem Träger (4) gehört, und einer Schraube. (17), die einen Kopf umfasst, der mit einem Körper verbunden ist, der über einen Gewindeteil verfügt, welcher für das Zusammenwirken mit einem Loch eines Teils bestimmt ist, das mit dem Träger verbunden werden soll, wobei der Träger eine geringere mechanische Festigkeit als die Schraube aufweist, **dadurch gekennzeichnet, dass** der Bohrungsaustritt (26) kegelstumpfförmig ausgebildet ist, **dass** der Schraubenkopf über eine Seitenfläche (29) und eine rotationssymmetrische ebene Unterkopffläche (27) verfügt, die mit der Seitenfläche (29) einen in etwa rechen Winkel bildet, und **dass** die durch den Schraubenkopf am Bohrungsaustritt (26) hinterlassene Eintiefung zumindest folgende Flächen umfasst;
- eine erste Fläche (31), die sich in Umfangsrichtung um die Rotationsachse der Schraube erstreckt,
- eine zweite Fläche (32), die zu einem Wulst (23) gehört, sich in Umfangsrichtung um die Rotationsachse der Schraube erstreckt und die erste Fläche (31) verlängert,
- eine dritte Fläche (34), die aus der Anpassung der Seitenfläche (29) der Schraube (17) im Träger (4) hervorgeht.

9. Dichte Verbindung nach dem vorangehenden Anspruch, **dadurch gekennzeichnet, dass** der Kopf der Schraube über eine Abschrägung (24) verfügt, welche die Verbindung zwischen der Seitenfläche (29) des Kopfes der Schraube (17) und der Unterkopffläche (27) der Schraube (17) herstellt, und **dass** die Eintiefung eine vierte Fläche (33) umfasst, die aus der Anpassung der Abschrägung (24) im Träger (4) hervorgeht.

10. Dichte Verbindung nach Anspruch 8 oder 9, **dadurch gekennzeichnet, dass** die Verbindung zwischen einem vorderen Anlasserträger (4) und mindestens einer Schraube zur Befestigung eines Einrückrelais (2) an diesem Träger erfolgt.

11. Dichte Verbindung nach Anspruch 8, **dadurch gekennzeichnet, dass** die Verbindung zwischen einem hinteren Lagerschild (6) eines Anlassers und mindestens einer Schraube zur Befestigung eines Einrückrelais (2) an diesem Lagerschild erfolgt.
